**Europäisches Patentamt**

**European Patent Office**

**Office européen des brevets**

(19)

(11) Publication number: **0 136 426**
**A2**

(12) # EUROPEAN PATENT APPLICATION

(21) Application number: **84108250.6**

(22) Date of filing: **13.07.84**

(51) Int. Cl.⁴: **G 01 B 3/10**

(30) Priority: **30.09.83 US 537638**

(43) Date of publication of application:
**10.04.85 Bulletin 85/15**

(84) Designated Contracting States:
**DE FR GB IT SE**

(71) Applicant: **SPENCER PRODUCTS COMPANY**
**1134 Poplar Place South**
**Seattle Washington 98144(US)**

(72) Inventor: **Lamson, Robert D.**
**3333 Cascadia Avenue South**
**Seattle Washington 98144(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Tape measure.**

(57) A gearless, open-faced, direct-drive, spring-rewound tape measure eliminates the need for a manual-rewind handle or gears to increase the spring tensioning force. A spiral spring is retained within a spring-retaining disk which is revolvable about a hub. The hub may be attached to the cover plate and the spring tension adjusted by revolving the cover plate while the spring-retaining disk remains stationary. Alternatively, the cover plate may be coupled through an input disk to revolve the spring-retaining disk and to adjust the tension of a spring which is retained within a spring-retaining well of the spring-retaining disk. In ordinary use, the cover plate is restricted from revolving by compression lock rings which sandwich the cover plate. The tape measure may include a brake to allow holding the tape in an unwound condition.

./...

EP 0 136 426 A2

FIG. 1

## Description

## TAPE MEASURE

## Reference to Related Application

This application is a continuation-in-part application of U.S.S.N. 352,127, filed February 25, 1982.

## Technical Field

The present invention relates to a gearless tape measure having an adjustable tension and a brake.

## Background Art

Many types of spring-tension-rewind tape measures are available today. The longer tapes usually require manual rewinding to assist the spring; therefore, the tape measures include an external handle. This handle is in constant danger of being broken, lost, or damaged when the tape measure is used.

United States Patent 3,054,573 discloses an improved tape measure which eliminates projecting parts, such as handles by using gears within the tape to augment the spring tension. The spring and driving gears are separated in sealed compartments. Although an improvement over the external-handle tape measures, this gear-type tape measure still presents serious problems to economical construction and efficient use. For example, the gears of the tape measure can foul with dirt during logging and other uses of the tape measure. Modern improvements in spring metal have eliminated the necessity of using a gear system to provide necessary spring tensioning force to retract even long tapes. The advent of the modern springs has allowed improvements to the tape measure, especially the removal of gears, which are incorporated in the improved tape measure of this invention.

0136426

## Disclosure of Invention

A gearless, open-faced, direct-drive, spring-rewound tape measure is thinner and lighter than conventional prior art tape measures and can be produced more cheaply. Generally, the tape measure includes a generally disk-shaped dust cover having a centrally disposed hub which projects upwardly substantially perpendicular to the cover from one side of the cover. A revolvable, spring-retaining disk, which has a diameter slighlty less than the diameter of the cover, is seated on the cover around the hub and has a spring-retaining well whose outer periphery is defined by an upraised wall. The wall is substantially concentric with the disk and has at least one slot to allow passage of the spring or tape through the wall. A spiral spring is retained within the well of the spring-retaining disk. One end of the spring is affixed to the hub, preferably by placing a tang of the spring in a slot of the hub. The other end of the spring is attached to a graduated tape. Usually, the tape passes through the slot in the wall of the spring-retaining disk and is wound about the outer periphery of the wall. Thus, the tape is exposed and the tape measure is "open-faced." The slotted wall protects the spring from fouling by dirt.

To set the tape measure at a predetermined tensioning force or to adjust the tensioning force after assembly of the tape measure, an input tensioning assembly is incorporated into the improved tape measure. Preferably, the input tensioning assembly includes a revolvable input disk which has a diameter slightly less than the diameter of the cover and which is seated atop the wall of the spring-retaining disk about the hub. When the input disk is compressed tightly against the top of the wall of the spring-retaining disk and is revolved, the spring-retaining disk also turns, Because the spring is constrained in the hub, which is fixed, the spring either tightens or loosens as the disk turns relative to the hub, since it winds or unwinds about the hub.

A generally disk-shaped cover plate, which has a diameter slightly less than the diameter of the cover, rests atop the input disk and allows revolution of the input disk and spring-retaining disk during use of the tape while being compressible down upon the input disk so that the tension of the spring may be adjusted. That is, the cover plate is capable of turning both the input disk and the spring-retaining disk when it is compressed tightly against the input disk and is turned relative to the cover. To hold the cover plate above the cover and input disk during normal use of the tape measure, a pair of compression lock rings sandwich the edge of the cover plate. Each lock ring has an outside diameter substantially equal to the diameter of the bottom cover. When compressed against the top cover plate, the lock rings hold the cover plate and keep it from revolving. When loosened, the lock rings allow the cover plate to be pressed against the input disk and turned to simultaneously turn the input disk and spring-retaining disk. Fasteners join the two lock rings and bottom cover in substantially parallel, axially aligned positions. These fasteners allow holding of the cover plate tightly between the lock rings during normal use of the tape measure, but allow the cover plate to be compressed against the input disk when desired. After a tension adjustment, the fasteners allow refastening of the lock rings to hold the cover plate and to allow normal use of the tape measure. Preferably, the fasteners include a plurality of collars positionable at predetermined locations around the periphery of the cover and a plurality of screws to fasten the lock rings or the cover to the collars, depending upon the side of the tape measure being considered.

Alternatively, and preferably, the tape measure has a generally disk-shaped dust cover which has a central hub-receiving well. A revolvable spring-retaining disk and an input disk, as previously described, overlie the cover. A cover plate completes the tape measure and includes a centrally disposed hub which projects downwardly substantially perpendicular to the cover plate. The spring is attached to the hub. As previously described, the cover plate has a diameter slightly less than the diameter of the cover and is retained in locking rings. When the rings are loosened, the cover plate may be turned to tighten or to loosen the spring.

To improve performance of the tape measure of this invention, a slide ridge may be added to the spring-retaining disk to abut the cover and to reduce the frictional surface area of contact between the spring-retaining disk and the cover. This slide ridge ensures that the spring-retaining disk is easier to revolve about the hub. Also, the input disk may include an inset groove to mate with the top of the wall so that the wall revolves in the groove in the input disk when the tape measure is assembled. This groove helps to limit wobble of the spring-retaining disk. Finally, the input disk may also include a plurality of stabilizers which project upwardly from the input disk between its top and the cover plate to reduce wobble of the input disk.

The tape measure may also include a friction brake which will hold the tape when it is pulled from the spring-retaining disk. The brake bears against the tape to counter the spring tension that seeks to automatically retract the tape.

Thus, a gearless, open-faced, direct-drive, spring-rewound tape measure is easily constructed and is a decided improvement over existing tape measures. The entire tape measure may be made from aluminum or plastic and, therefore, may be much lighter and less expensive. The tape measure is thinner than earlier tape measures because gears or handles are eliminated through use of the improved spiral spring. A simple and quick means is employed to adjust the spring tension without use of gears. The tape measure is less susceptible to fouling by dirt and is less susceptible to damage even when placed in heavy use.

Brief Description of the Drawings

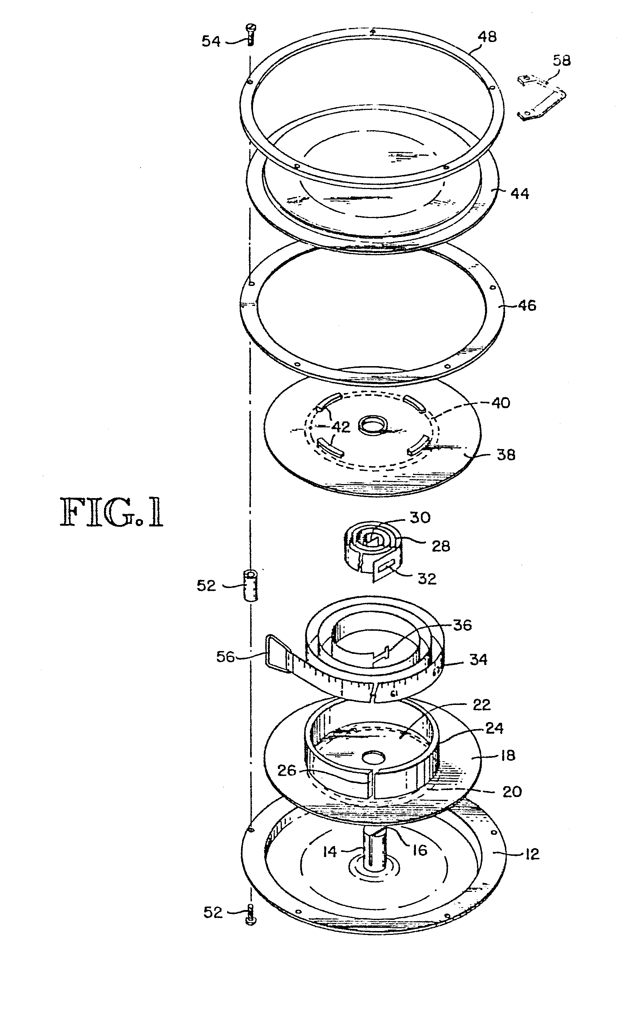

Figure 1 is an exploded assembly drawing of a tape measure of this invention.

Figure 2 is a typical cross-section through a tape measure.

Figure 3 is an isometric of a tape measure.

Figure 4 is a typical cross-section of a preferred tape measure.

Figure 5 is an isometric of a preferred tape measure including a brake.

Figure 6 is a sectional detail of a preferred brake in the retracted position.

Figure 7 is a sectional detail, similar to Figure 6, showing the brake in the actuated position.

Figure 8 is a sectional elevation of the brake of Figure 6, taken along line 8-8 of Figure 6.

Figure 9 is an exploded assembly drawing of the tape of Figure 4.

Best Mode for Carrying Out the Invention

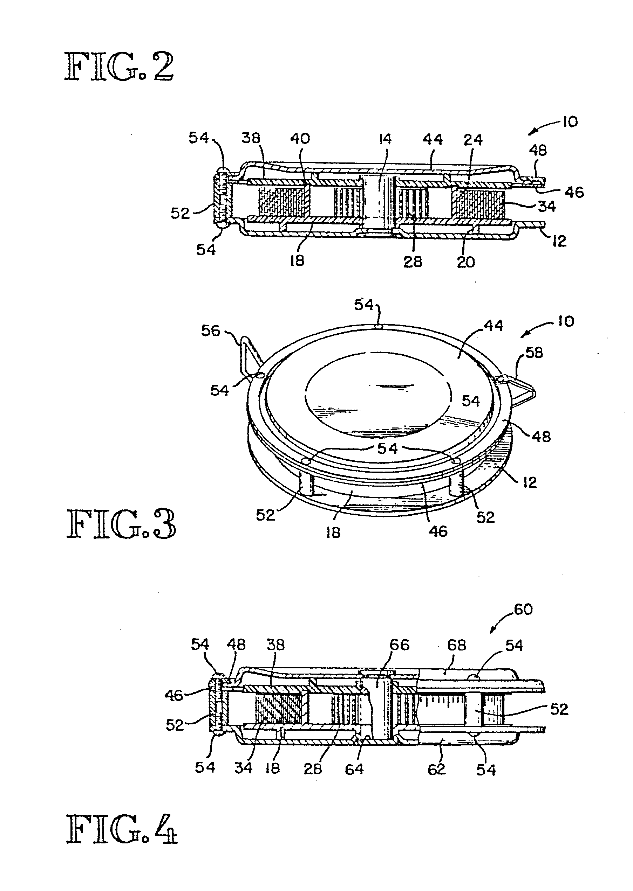

A gearless, open-faced, direct-drive, spring-rewound tape measure 10 has a cover 12 as a base. Positioned centrally within the disk-shaped cover 12 is a hub 14 having a slot 16 which is capable of receiving the tang of a spiral spring. The hub 14 projects upwardly substantially perpendicular to the cover 12 from one side of the cover 12. The hub 14 attaches to the cover 12 with a wedge and stake assembly (as best shown in Figure 2). A spring-retaining disk 18 seats on the cover 12 around the hub 14. The inside diameter of the central opening of the spring-retaining disk is substantially equal to the outside diameter of the hub 14. To reduce the surface area of contact between the spring-retaining disk 18 and the cover 12, a slide ridge 20 depends downwardly from the spring-retaining disk 18. A spring-retaining well 22 is formed by an intermediate up-raised wall 24. The wall 24 is substantially circular in plan view and extends upwardly a distance at least slightly greater than the thickness of the spring or tape. A slot 26 in the wall 24 of the spring-retaining disk 18 allows threading of the tape or spring through the wall so that the spring and tape may communicate between the spring-retaining well 22 and the outside of the spring-retaining disk 18.

A spiral spring 28 is placed within the spring-retaining well 22 and is affixed to the hub 14 by placing a tang 30 of the spring 28 into the slot 16 of the hub 14. A slot 32 is cut into the middle of the spring 28 at its other end. The tape 34 is generally a graduated measuring tape and has a tongue 36 that links with the slot 32 of the spiral spring 28. Generally, the tape 24 is wound around the outer periphery of the wall 24 of the spring-retaining disk 18 (as shown in Figure 2), thus making the assembled tape measure 10 "open-faced."

An input disk 38 rests above the spring-retaining disk 18. An inset groove 40 of the input disk 38 preferably mates with the top of the wall 24 of the spring-retaining disk 18. The input disk 38 is of a diameter slightly less than that of the cover 12 and is positioned around the hub 14 to permit concentric turning.

The input disk 38 is the first part of the input tensioning assembly which allows pretensioning of the spring 28 and which allows adjustment of the spring tension during use of the tape measure 10. The input disk 38 is revolvable about the hub 14 and is capable of revolving the spring-retaining disk 18 when the input disk 38 is compressed tightly against the top of the wall 24.

To stabilize the input disk 38 against wobble, preferably a plurality of spaced stabilizers 42 project upwardly from the top surface of the input disk 38 into the space between the input disk 38 and a cover plate.

The input tensioning assembly is completed with a generally disk-shaped cover plate 44 which is sandwiched between two compression lock rings 46 and 48. The cover plate 44 has a diameter slightly less than the diameter of the cover 12 and is capable of being compressed to contact the input disk 38 and to revolve the input disk 38 and spring-retaining disk 18 simultaneously to adjust the tension of the spring 28 within the spring-retaining well 22. The lock rings 46 and 48 have an outside diameter substantially equal to the diameter of the cover 12. In common use, the cover plate 44 is retained against revolution by the lock rings 46 and 48. A downwardly depending flange 50 on the upper lock ring 46 helps to retain the cover plate 44 between the lock rings 46 and 48.

0136426

Fasteners, such as a plurality of collars 52, are positioned at predetermined locations about the periphery of the lock rings 46 and 48 and cover 12 to join the cover 12 and lock rings 46 and 48 in substantially parallel, axially aligned positions. Screws 54 are used to connect the cover 12 to the collars 52 and the lock rings 46 and 48 to the collars 52 (as best shown in Figure 2). The screws 54 fit through corresponding openings on the cover 12 and lock rings 46 and 48 and thread into the spacer collars 52. The plurality of collars 52 help to confine the tape 34 within the outside diameter of the cover 12 unless the end is pulled.

To adjust the spring tension, the screws 54 connecting the lock rings 46 and 48 to the collars 52 are loosened to remove the compression of the upper lock ring 48 against the cover plate 44. When the screws are sufficiently loosened, the cover plate will be revolvable in its seat upon the lower lock ring 46. Pressing the center of the cover plate 44 against the input disk 38 will exert a downward force upon the spring-retaining disk so that revolution of the cover plate 44 relative to the cover 12 will simultaneously revolve the input disk 38 and the spring-retaining disk 18. Because the tang 30 of the spiral spring 28 is retained in a slot 16 of the hub 14 and because the hub 14 is stationary, the spring 28 will become more tightly or more loosely wound, depending upon the direction of revolution, since the disk 18 revolves and the tape 34 passes through a slot 26 in the disk 18. Once a desired tension is achieved, the screws 52 are tightened to compress the rings 46 and 48 against the cover plate 44, thereby eliminating its revolution. The compression is then relieved, allowing the disks to revolve when the tape 34 is pulled.

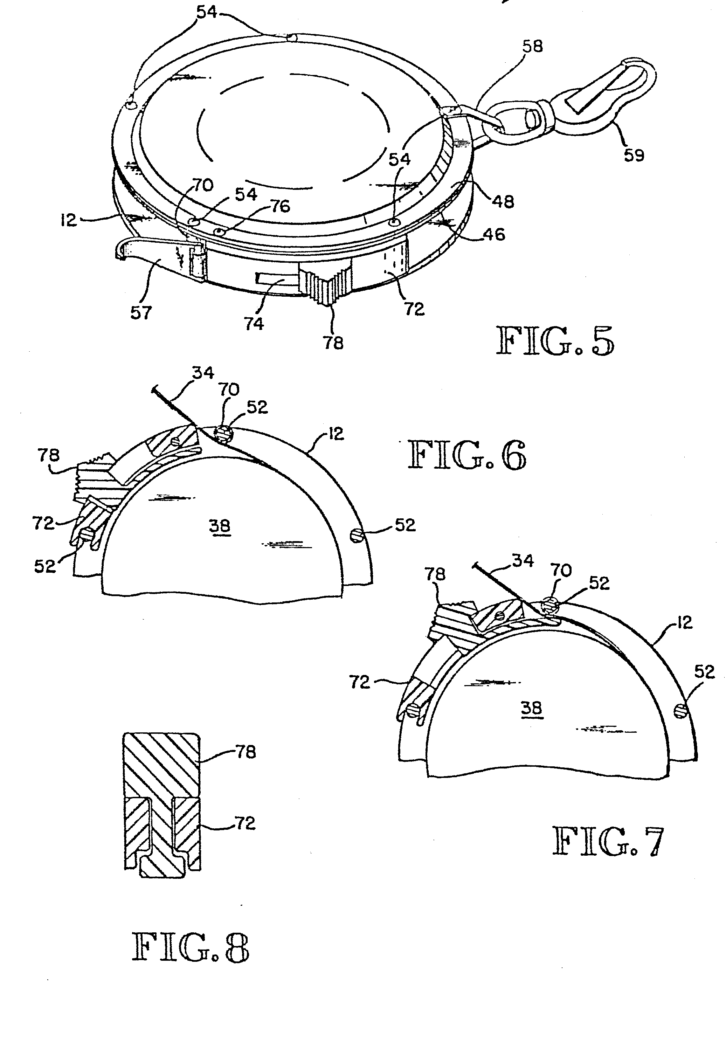

A handle 56 or a hook 57 (Fig. 5) on the exposed end of tape 34 constrains the tape's end from entering the well 22. Also, there is sufficient friction within the assembled tape measure 10 to constrain the spring-retaining disk 18 from revolving until a sufficient force is supplied to withdraw the tape 34. That is, the pretensioning of the spring 28 never exceeds the static friction which the spring-retaining disk 18 has with respect to the cover 12. This predetermined static friction may be varied by the thickness of the slide ridge 20 or in other known ways.

A clip receiver 58 and clip 59 may be placed upon the tape measure 10 above and below the cover 12 and cover plate 44 at a collar 52.

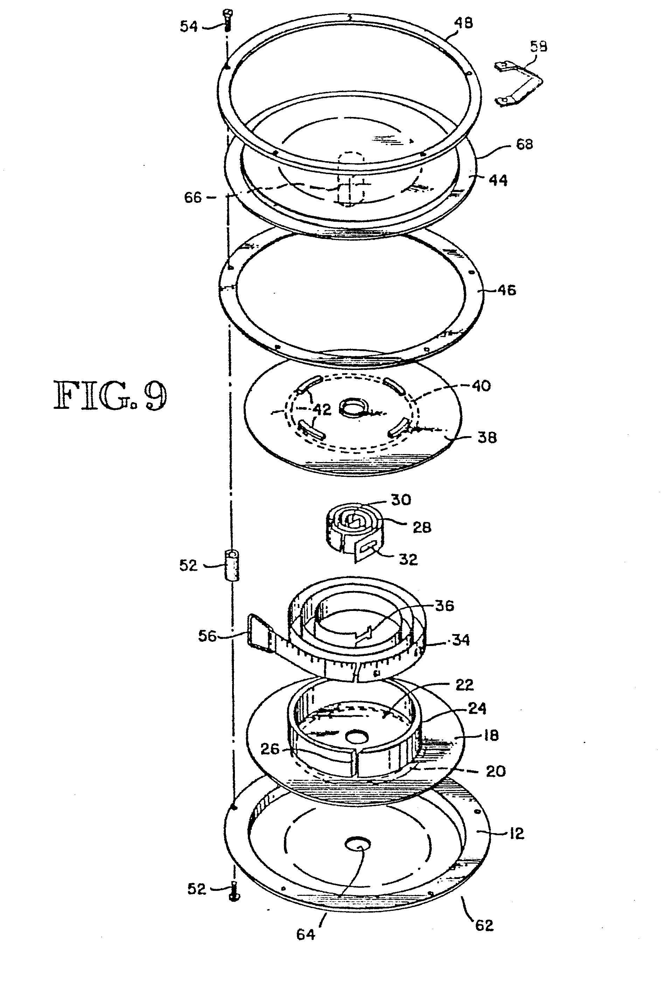

As best shown in Figures 4 and 9, the preferred tape measure 60, in contrast to the embodiment just described, has a generally disk-shaped cover 62 that may have a central nub-receiving well 64. A spring-retaining disk 18 and input disk 36 with spring 28 and tape 34, as previously described, are mounted above the cover 60 and are held in position by a hub 66 which is downwardly depending from a cover plate 68. The cover plate 68 has a diameter slightly less than the diameter of the cover 62. As previously described, lock rings 46 and 48 are used to retain the cover plate 68. When the rings 46 and 48 are loosened, the cover plate 68 may be turned to adjust the tension of the spring 28. The spring 28 is connected to the hub 66 and will be tightened or loosened as the hub 66 revolves because the spring-retaining disk 18 remains stationary. The well 64 has a diameter just slightly greater than the diameter of the hub 66.

Although shown with the spring-retaining disk 18 below the input disk 36, the order of these parts may be reversed.

To reduce friction between the revolving parts and the stationary parts, a lubricant, such as graphite or oil, may be used, if desired. Also, to promote withdrawal and retraction of the tape 34, a collar 52 may include a nylon sleeve 70 which rotates when the tape 34 rubs against the sleeve.

A brake mechanism preferably includes a nylon base 72 having a slot 74. The base fits between the cover 12 and the lower lock ring 46 and clips to a collar 52, as shown in Figures 6 and 7. The other end of the base 72 is attached with screws 76 to the cover 12 and lock rings 46 and 48.

The base 72 ends before the next collar 52 to create an opening for the tape 34. A tongue 78 having an end which extends through the slot 74 may be moved to apply pressure against the tape 34 at a collar 52. As shown in Figure 6, the tongue 78 is retracted and the tape 34 is free to wind or unwind. As shown in Figure 7, however, the tongue 78 can engage the tape 34 and can wedge it against the collar 52 to hold it. Other mechanisms for applying a brake for the tape measure will be apparent. The brake shown and described allows controlled rewinding of the tape by adjusting the friction encountered by the position of the tongue 78 in its slot 74.

While several embodiments have been shown and described, those skilled in the art will recognize modifications which can be made without departing from the inventive concept. Therefore, the claims should be interpreted liberally and should not be limited to the precise embodiments shown and described, unless limitation is necessary in view of the pertinent prior art.

## Claims

I claim:

1. A gearless, open-faced, direct-drive, spring-rewound tape measure, comprising:

   (a) a generally disk-shaped cover;

   (b) a revolvable, generally disk-shaped cover plate having a diameter slightly less than the diameter of the cover and having a centrally disposed hub projecting from the side of the cover plate substantially perpendicular to the cover plate;

   (c) a revolvable, spring-retaining disk having a diameter slightly less than the diameter of the cover, seated on the cover about the hub of the cover plate, and having a spring-retaining well which has an outer periphery that is defined by an upraised wall, the wall being substantially concentric with the disk and having at least one slot;

   (d) a spiral spring retained within the well of the spring-retaining disk and having two ends, one end being fixed to the hub;

   (e) a tape attached to the other end of the spring, passing through the slot in the wall, and wound about the outer periphery of the wall;

   (f) a revolvable disk having a diameter slightly less than the diameter of the cover, seated atop the wall of the spring-retaining disk about the hub to reduce friction between the spring-retaining disk and the cover plate when the tape is withdrawn;

   (g) a pair of lock rings to hold the cover plate, sandwiching the cover plate and having an outside diameter substantially equal to the diameter of the cover, wherein the lock rings hold the cover plate to prevent rotation of the cover plate during use of the plate; and

0136426

(h)   fasteners to join the lock rings and cover in substantially parallel, axially aligned positions, allowing holding of the cover plate tightly between the lock rings during use of the tape and allowing the cover plate to be revolved relative to the cover and spring-retaining disk to adjust the tension of the spring.

2.   The tape measure of claim 1 wherein the cover includes a central hub-receiving well and wherein the hub of the cover plate is received in the well.

3.   The tape measure of claim 1, further comprising a brake.

4.   The tape measure of claim 3 wherein the brake includes a tongue which bears against the tape when desired.

5.   The tape measure of claim 1 wherein the spring-retaining disk includes a depending slide ridge to abut the cover and to reduce the frictional surface area of contact between the spring-retaining disk and the cover.

6.   The tape measure of claim 1 wherein the input disk includes an inset groove to mate with the wall so that the wall revolves in the groove when the tape measure is assembled.

7.   The tape measure of claim 1 wherein the input disk includes stabilizers projecting upwardly from the input disk, which are positionable between the input disk and the cover plate to reduce wobble of the input disk.

8.   The tape measure of claim 1 wherein the fasteners include a plurality of collars positionable at predetermined locations around the periphery of the cover and lock rings, and a plurality of screws to fasten the lock rings and cover to the collars.

9.  A gearless, open-faced, direct-drive, spring-rewound tape measure, comprising:

(a)  a generally disk-shaped cover having a centrally disposed nub projecting upwardly substantially perpendicular to the cover from one side of the cover;

(b)  a revolvable, spring-retaining disk having a diameter slightly less than the diameter of the cover, seated on the cover about the hub, and having a spring-retaining well which has an outer periphery that is defined by an upraised wall, the wall being substantially concentric with the disk and having at least one slot;

(c)  a spiral spring retained within the well of the spring-retaining disk and having two ends, one end being fixed to the hub;

(d)  a tape attached to the other end of the spring, passing through the slot in the wall, and wound about the outer periphery of the wall;

(e)  an input tensioning assembly to allow pretensioning of the spring and to allow adjustment of the spring tension, including:

   (i)  a revolvable input disk having a diameter slightly less than the diameter of the cover, seated atop the wall of the spring-retaining disk about the hub, the input disk being capable of revolving the spring-retaining disk when tightly compressed against the top of the wall,

   (ii)  a generally disk-shaped cover plate having a diameter slightly less than the diameter of the cover and being capable of revolving the input disk and, in turn, the spring-retaining disk when compressed tightly against the input disk and revolved relative to the cover, and

   (iii)  a pair of compression lock rings to hold the cover plate, sandwiching the cover plate and having an outside diameter substantially equal to the diameter of the cover, wherein the lock rings hold the cover plate to prevent rotation of the cover plate during use of the tape; and

(f)    fasteners to join the lock rings and cover in substantially parallel, axially aligned positions, allowing holding of the cover plate tightly between the lock rings during use of the tape and allowing the cover plate to be compressed against the input disk and revolved to adjust the tension of the spring by revolving the spring-retaining disk relative to the stationary cover.

10.    The tape measure of claim 9, further comprising a brake for the tape.

11.    The tape measure of claim 10, wherein the brake includes a tongue that bears against the tape to hold the tape when desired.

12.    A gearless, open-faced, direct-drive, spring- rewound tape measure, comprising:

(a)    a generally disk-shaped cover having a centrally disposed hub projecting upwardly substantially perpendicular to the cover from one side of the cover;

(b)    a revolvable, spring-retaining disk

(i)    having a diameter slightly less than the diameter of the cover, seated on the cover,

(ii)    having a spring-retaining well which has an outer periphery defined by an upraised wall, the wall being substantially concentric with the disk, and

(iii)    having at least one slot, and having a depending slide ridge to abut the cover and to reduce the frictional surface area of contact between the spring-retaining disk and the cover;

(c)　a spiral spring retained within the well of the spring-retaining disk and having two ends, one end being fixed to the hub;

(d)　a tape attached to the other end of the spring, passing through the slot in the wall, and wound about the outer periphery of the wall;

(e)　an input tensioning assembly to allow pretensioning of the spring and to allow adjustment of the spring tension, including:

　　(i)　a revolvable input disk having a diameter slightly less than the diameter of the cover, seated atop the wall of the spring-retaining disk about the hub, capable of revolving the spring-retaining disk when tightly compressed against the top of the wall, including an inset groove to mate with the wall so that the wall revolves in the groove when the tape measure is assembled, and including stabilizers projecting upwardly from the input disk and the cover plate to reduce wobble of the input disk,

　　(ii)　a generally disk-shaped cover plate having a diameter slightly less than the diameter of the cover and capable of revolving the input disk and, in turn, the spring-retaining disk when compressed tightly against the input disk and revolved relative to the cover, and

　　(iii)　a pair of compression lock rings to hold the cover plate, sandwiching the cover plate and having an outside diameter substantially equal to the diameter of the cover, wherein the lock rings hold the cover plate to prevent rotation of the cover plate during use of the tape; and

**0136426**

(f) fasteners to join the lock rings and cover in substantially parallel, axially aligned positions, allowing holding of the cover plate tightly between the lock rings during use of the tape and allowing the cover plate to be compressed against the input disk and revolved to adjust the tension of the spring by revolving the cover plate relative to the stationary cover, including a plurality of collars positionable at predetermined locations around the periphery of the cover and the lock rings and including a plurality of screws to fasten the lock rings and cover to the collars, wherein the cover plate can be compressed against the input disk and revolved when the screws holding the lock rings are loosened.

13. The tape measure of claim 12, further comprising a brake.

14. The tape measure of claim 13 wherein the brake includes a tongue that bears against the tape to hold the tape when desired.

15. A gearless, spring-rewound tape measure comprising:

(a) top and bottom covers;

(b) a spring for automatically rewinding the tape;

(c) a tape connected to the spring;

(d) means for holding the tape and spring between the covers, allowing winding and unwinding of the tape; and

(e) a brake to hold the tape in an unwound condition against the tension of the spring.

16. The tape measure of claim 15, further comprising means for adjusting the tension of the spring by turning one cover relative to the other.

16    0136426

17. The tape measure of claim 16 wherein the brake includes a tongue which bears against the tape when braking is desired.

18. The tape measure of claim 17 wherein the spring is connected to a hub, the hub being connected to one of the covers.

19. The tape measure of claim 16, further comprising a spring-retaining disk to hold the tape and the spring, the disk including a wall and a slot, the tape being essentially wound around the outside of the wall.

FIG. 1

0136426

FIG. 2

FIG. 3

FIG. 4

-3/4-

0136426

FIG. 5

FIG. 6

FIG. 7

FIG. 8

FIG. 9